# EUROPEAN PATENT SPECIFICATION

(11) **EP 3 625 925 B1**
(45) Date of publication and mention of the grant of the patent: **01.09.2021**
(21) Application number: 17728208.4
(22) Date of filing: 07.06.2017
(51) Int. Cl.: H04L 9/08

(54) **QUANTUM KEY DISTRIBUTION TRANSMITTER, SYSTEM AND METHOD**
SENDER, SYSTEM UND VERFAHREN ZUR QUANTENSCHLÜSSELVERTEILUNG
ÉMETTEUR, SYSTÈME ET PROCÉDÉ DE DISTRIBUTION DE CLÉ QUANTIQUE

(43) Date of publication of application: 25.03.2020
(73) Proprietor: Huawei Technologies Duesseldorf GmbH, 40549 Düsseldorf (DE)
(72) Inventor: FUNG, Fred, Chi, Hang, 80992 Munich (DE); WANG, Dawei, 80992 Munich (DE)
(74) Representative: Pfenning, Meinig & Partner mbB
(86) International application number: PCT/EP2017/063794
(87) International publication number: WO 2018/224138

(56) References cited:
- BING QI: "Simultaneous classical communication and quantum key distribution using continuous variables", PHYSICAL REVIEW A, vol. 94, no. 4, 1 October 2016 (2016-10-01), XP055418085, ISSN: 2469-9926, DOI: 10.1103/PhysRevA.94.042340
- TOBIAS GEHRING ET AL: "Implementation of continuous-variable quantum key distribution with composable and one-sided-device-independent security against coherent attacks", NATURE COMMUNICATIONS, vol. 6, 30 October 2015 (2015-10-30), page 8795, XP055418033, DOI: 10.1038/ncomms9795

## Description

### TECHNICAL FIELD

Generally, the present invention relates to the field of quantum key distribution. More specifically, the present invention relates to a continuous variable quantum key distribution (CV QKD) transmitter, system and method.

### BACKGROUND

Quantum key distribution (QKD) uses quantum carriers (also referred to as quantum signals), typically single-photon or strongly attenuated light pulses, for sharing a secret electronic key. Typically, a sequence of such light pulses, i.e. quantum signals, is transmitted from a transmitter (often referred to as "Alice") via a quantum channel to a receiver (often referred to as "Bob"), wherein each light pulse encodes a key bit. The quantum properties of light, in particular the Heisenberg uncertainty principle, ensure that no information can be gained on these key bits without disturbing the quantum state of the photons. Public communications over an additional classical channel are then used to estimate the maximum amount of information that a potential eavesdropper may have acquired, and to distil a secret key out of the raw data.

Several practical schemes for quantum key distribution have been proposed and implemented in the past, including discrete-variable and continuous-variable (CV) QKD are employed to distribute secret keys. CV QKD systems make use of continuous quantum variable, such as the electric field amplitudes, to obtain possibly more efficient alternatives to conventional photon-counting QKD techniques. From a practical point of view, the CV approach has potential advantages because it is compatible with the standard optical telecommunication technologies. It is foreseeable that this approach will become a viable candidate for large-scale secure quantum communications.

Current CV-QKD systems are based on the idea to use different degrees of freedom to transmit quantum signals (including the quantum signals used for generating a secret key) and classical messages (e.g. for transmitting non-sensitive side information) separately, such as by using different polarizations, times, or frequencies.

BING QI, "Simultaneous classical communication and quantum key distribution using continuous variables", PHYSICAL REVIEW A, (20161001), vol. 94, no. 4, shows that using optical coherent detection enables implementing classical communication and quantum key distribution simultaneously on the same platform.

In light of the above, there is still a need for improved devices and methods for continuous variable quantum key distribution.

### SUMMARY

It is an object of the invention to provide improved devices and methods for continuous variable quantum key distribution.

The foregoing and other objects are achieved by the subject matter of the independent claims. Further implementation forms are apparent from the dependent claims, the description and the figures.

Generally, the invention is based on the idea to multiplex the quantum QKD signals over classical signals on the same optical mode of propagation. Accordingly, embodiments of the invention allow to transmit signals. Each of these signals may, for instance, be transmitted using coherent light. These signals are organized into groups where each group contains signals that are close enough to facilitate quantum key generation (the close proximity provides security) while at the same time the group to which the transmitted signal belongs conveys a classical message. The classical message conveyed by the transmitted signal is defined by the group to which the transmitted signal belongs. In other words, in the case, for instance, of a 4-group scheme the transmitted signals will be arranged into 4 groups, wherein each group lies in a different quadrant and defines one different classical message. The 4-groups scheme is realized in a similar way as a 4-PSK scheme in classical modulation. The quadrant of the X-P quadrature plane (herein also referred to as phase space) in which the group of the transmitted signal lies is used to encode the classical message according to embodiments of the invention. The position in the quadrant of the quantum QKD signals of each group provides the quantum signal. According to embodiments of the invention the partitioning of the X-P quadrature plane can be defined by the locations of the classical messages. For example, for an 8-group scheme having 8 classical messages, each classical message can correspond to 1/8 of the X-P quadrature plane, i.e. phase space. As for the 4-groups scheme, also the 8-groups scheme is realized in a similar way as a 8-PSK scheme in classical modulation. The receiver can decode the quantum and classical information simultaneously by using, for instance, a coherent receiver. As a side effect, embodiments of the invention help locking the LO of the receiver.

More specifically, according to a first aspect the invention relates to a transmitter for a continuous variable quantum key distribution system. The transmitter comprises a modulator configured to modulate a quantum signal with a continuous distribution in phase and amplitude using a nested modulation for generating a modulated quantum signal, wherein quadrature components of the modulated quantum signal define a phase space position of a set of predefined phase space positions, wherein each phase space position of the set of predefined phase space positions is located in a different local sub-region of at least two local sub-regions of a first global phase space region and at least two local sub-regions of a second global phase space region, and wherein the phase space positions of the set of predefined phase space positions located in the at least two local sub-regions of the first global phase space region or the at least two local sub-regions of the second global phase space region have different phases, but substantially the same amplitudes. A nested modulation is a modulation done by the superposition of QKD signals onto classical messages. In other words the transmitted signal is used on one hand as QKD signal and to identify the group associated with the classical message as described before.

The nested modulation comprises a first modulation component and a second modulation component, wherein the first modulation component modulates the quantum signal into the first global phase space region and the second modulation component modulates the quantum signal into one sub-region of the at least two local sub-regions of the first global phase space region, or wherein the first modulation component modulates the quantum signal into the second global phase space region and the second modulation component modulates the quantum signal into one sub-region of the at least two local sub-regions of the second global phase space region.

Thus, an improved transmitter for continuous variable quantum key distribution is provided. The improved CV QKD transmitter according to the first aspect of the invention allows to efficiently transmit both quantum information and classical information simultaneously, where the former is used for quantum key generation and the latter for classical message transmission. The amplitude of the signal is large, which allows the classical information to be conveyed as well and also helps the synchronization of the local oscillator of a receiver of the CV QKD system. On the other hand, the quantum signals of a group, i.e. a global phase space region, are close in order to provide security of quantum key generation.

In a first possible implementation form of the transmitter according to the first aspect, the first modulation component comprises at least an amplitude modulation.

In a second possible implementation form of the transmitter according to the first implementation form of the first aspect, the modulator comprises an I/Q modulator configured to modulate the quantum signal using the first modulation component.

In a third possible implementation form of the transmitter according to any one of the first to second implementation form of the first aspect, the second modulation component comprises a phase modulation.

In a fourth possible implementation form of the transmitter according to the third implementation form of the first aspect, the modulator comprises a phase shifter configured to modulate the quantum signal using the second modulation component.

In a fifth possible implementation form of the transmitter according to the third or fourth implementation form of the first aspect, the second modulation component further comprises an amplitude modulation.

In a sixth possible implementation form of the transmitter according to the first aspect as such or any one of the first to fifth implementation form thereof, the modulator is configured to modulate a further quantum signal with a continuous distribution in phase and amplitude using a further nested modulation for generating a further modulated quantum signal, wherein quadrature components of the further modulated quantum signal define a further phase space position of a further set of predefined phase space positions, wherein the further set of predefined phase space positions differs from the set of predefined phase space positions.

According to a second aspect the invention relates to a continuous variable quantum key distribution system comprising a transmitter according to the first aspect of the invention and a receiver, wherein the receiver is configured to determine the phase space position defined by the quadrature components of the modulated quantum signal on the basis of the modulated quantum signal received via a quantum communication channel from the transmitter, wherein the receiver is further configured to derive a first information symbol depending on whether the phase space position is located in the first global phase space region or the second global phase space region and to generate at least a portion of a secret key on the basis of which local sub-region the phase space position is located in.

In a first possible implementation form of the system according to the second aspect as such, the receiver comprises a homodyne detector or heterodyne detector for determining the phase space position defined by the quadrature components of the modulated quantum signal. Alternatively to the homodyne or heterodyne detector, the receiver may comprise any type of coherent detector.

According to a third aspect the invention relates to a continuous variable quantum key distribution method, comprising the following steps: modulating a quantum signal with a continuous distribution in phase and amplitude using a modulation for generating a modulated quantum signal, wherein quadrature components of the modulated quantum signal define a phase space position of a set of predefined phase space positions, wherein each phase space position of the set of predefined phase space positions is located in a different local sub-region of at least two local sub-regions of a first global phase space region and at least two local sub-regions of a second global phase space region, and wherein the phase space positions of the set of predefined phase space positions located in the at least two local sub-regions of the first global phase space region or the at least two local sub-regions of the second global phase space region have different phases, but substantially the same amplitudes; determining the phase space position defined by the quadrature components of the modulated quantum signal on the basis of the modulated quantum signal received via a quantum communication channel from a transmitter; deriving a first information symbol depending on whether the phase space position is located in the first global phase space region or the second global phase space region; and generating at least a portion of a secret key on the basis of which local sub-region the phase space position is located in.

The nested modulation comprises a first modulation component and a second modulation component, wherein the first modulation component modulates the quantum signal into the first global phase space region and the second modulation component modulates the quantum signal into one sub-region of the at least two local sub-regions of the first global phase space region, or wherein the first modulation component modulates the quantum signal into the second global phase space region and the second modulation component modulates the quantum signal into one sub-region of the at least two local sub-regions of the second global phase space region.

Thus, an improved method for continuous variable quantum key distribution is provided.

In a first possible implementation form of the method according to the third aspect, the first modulation component comprises at least an amplitude modulation.

In a second possible implementation form of the method according to the first implementation form of the third aspect, the second modulation component comprises a phase modulation.

In a third possible implementation form of the method according to the second implementation form of the third aspect, the second modulation component further comprises an amplitude modulation.

In a fourth possible implementation form of the method according to the third aspect as such or any one of the first to third implementation form thereof, the method comprises the additional step of modulating a further quantum signal with a continuous distribution in phase and amplitude using a further nested modulation for generating a further modulated quantum signal, wherein quadrature components of the further modulated quantum signal define a further phase space position of a further set of predefined phase space positions, wherein the further set of predefined phase space positions differs from the set of predefined phase space positions.

According to a fourth aspect the invention relates to a computer program product comprising program code for performing the method according to the second aspect when executed on a processor.

The invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a CV QKD system comprising a transmitter and a receiver according to an embodiment;
Fig. 2 shows a detailed view of the predefined phase space positions used by the CV QKD system of figure 1;
Fig. 3 shows a schematic diagram comparing the embodiment of figure 1 with a standard QKD scheme;
Fig. 4 illustrates the effect of intensity fluctuations on the embodiment of figure 1;
Fig. 5 shows a schematic diagram illustrating a receiver of a CV QKD system according to an embodiment;
Fig. 6 shows a schematic diagram illustrating a receiver of a CV QKD system according to an embodiment;
Fig. 7 shows a schematic diagram illustrating a set of predefined phase space positions used by a receiver according to an embodiment for encoding quantum and classical information;
Fig. 8 shows a schematic diagram illustrating a temporal sequence of predefined phase space positions used by a receiver according to an embodiment for encoding quantum and classical information; and
Fig. 9 shows a diagram illustrating a CV QKD method according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

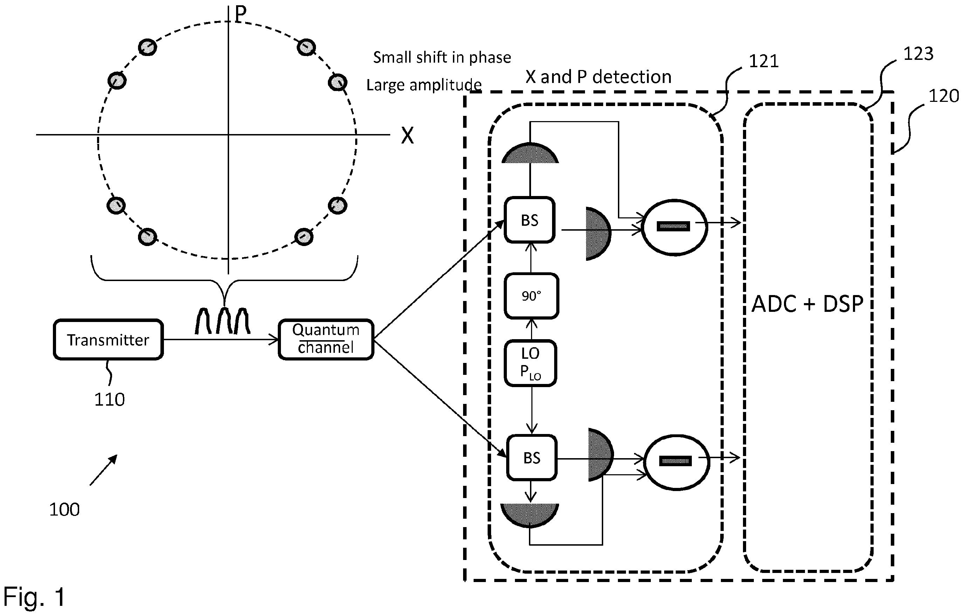

Figure 1 shows a schematic diagram illustrating a CV QKD system 100 according to an embodiment of the invention, comprising a transmitter 110 according to an embodiment and a receiver 120, which can communicate with each other via a quantum communication channel as well as a classical communication channel (not shown in figure 1). In an embodiment, at least a portion of the quantum communication channel can be provided by an optical fiber.

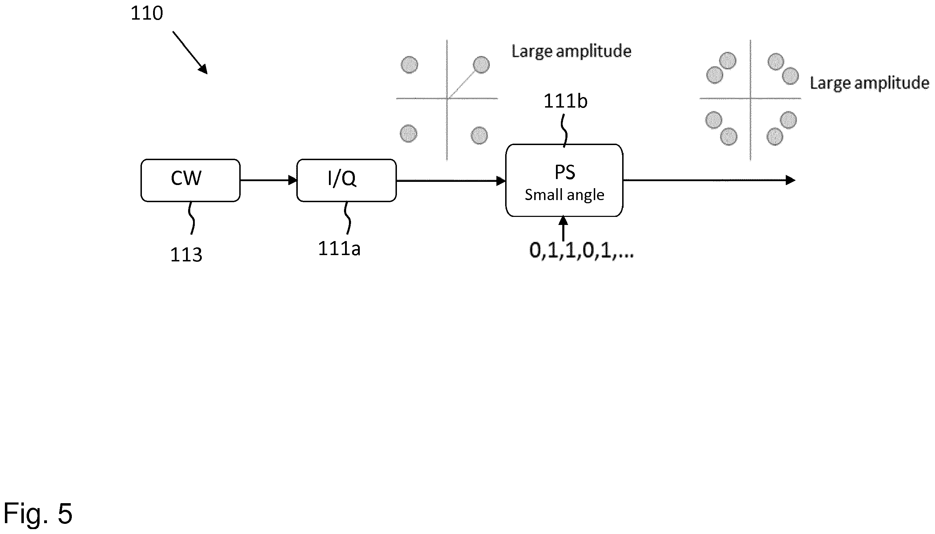

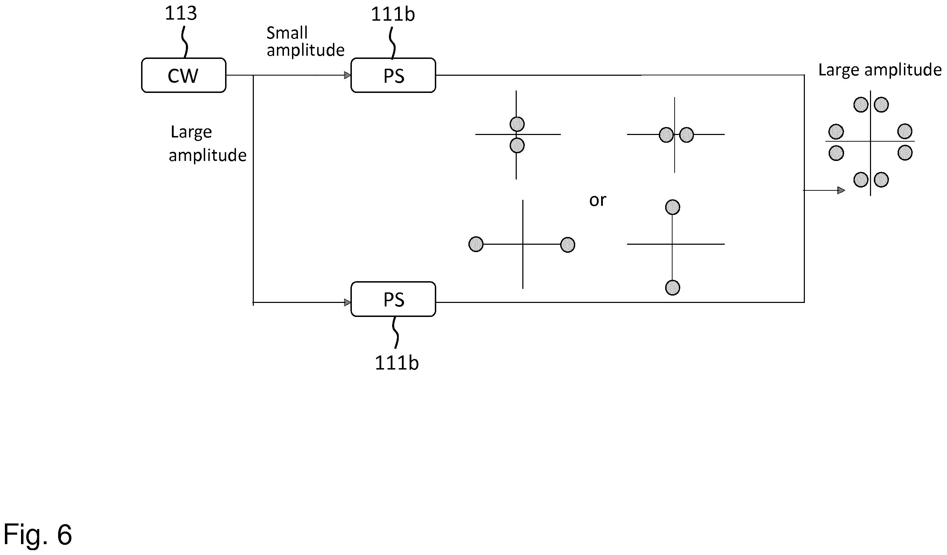

The transmitter 110 comprises a modulator configured to modulate a quantum signal with a continuous distribution in phase and amplitude using a nested modulation for generating a modulated quantum signal. A possible embodiment of the transmitter 110 and the modulator will be described in more detail below in the context of figures 5 and 6. A nested modulation is a modulation done by the superposition of QKD signals onto classical messages. In other words the transmitted signal is used on one hand as QKD signal and to identify the group associated with the classical message as described before.

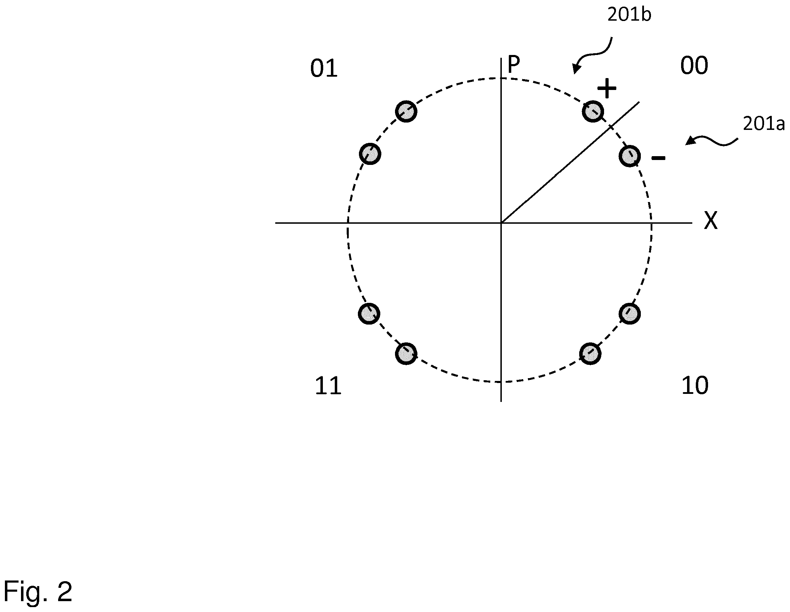

As indicated by the phase space illustration (or X-P quadrature plane) in figure 1, quadrature components of the modulated quantum signal provided by the transmitter 110 define a phase space position of a set of predefined phase space positions, wherein each phase space position of the set of predefined phase space positions is located in a different local sub-region, or in short sub-regions, of at least two local sub-regions of a first global phase space region or in short first phase space region and at least two local sub-regions of a second global phase space region or in short second phase space region. In the phase space illustration shown in figure 1 (which is also shown in figure 2) the set of predefined phase space positions comprises eight distinct phase space positions. Thus, in the embodiment shown in figures 1 and 2 the phase space is divided into four distinct global phase space regions, namely the four quadrants of the X-P quadrature plane, wherein each of the four quadrants, i.e. global phase space regions, comprises two local sub-regions or in short sub-regions, for instance, the two local sub-regions 201a and 201b of the first phase space quadrant shown in figure 2. In the embodiment shown in figure 2, the two local sub-regions 201a and 201b together cover the whole first phase space quadrant. In other embodiments, the two local sub-regions together can cover only a portion of the corresponding global phase space region. In a 4-group modulation scheme, the local sub-regions 201a, 201b divide a quadrant in the X-P plane in two. For instance the sub-region 201a may correspond to the portion of the X-P quadrant below 45°, while the sub-region 201b may correspond to the portion of the X-P quadrant above 45°. In a similar way, in the case of an 8-group modulation scheme, each slice in the X-P plane may be divided in two local sub-region and define 16 local sub-region used for modulating the quantum signal.

As can be taken from figures 1 and 2, the phase space positions of the set of predefined phase space positions located, for instance, in the first quadrant of the X-P quadrature plane correspond to different phases. In other words, the first phase space position in the first quadrant of the X-P quadrature plane has a different phase than the second phase space position in the first quadrant of the X-P quadrature plane, but the same amplitude. As can be taken from figures 1 and 2, this is also the case for the phase space positions in the other three quadrants.

The receiver 120 shown in figure 1 is configured to determine the phase space position defined by the quadrature components of the modulated quantum signal on the basis of the modulated quantum signal received via the quantum communication channel from the transmitter 110 and to derive a first "classical" information symbol depending on whether the phase space position is located in the first global phase space region or the second global phase space region and to generate at least a portion of a secret key on the basis of which local sub-region the phase space position is located in. In the embodiment shown in figure 1, the receiver 120 comprises a quadrature detection unit 121 and a processing unit 123. The quadrature detection unit 121 can comprise a local oscillator (provided, e.g., by a laser), a 90° phase shifter and two beamsplitters (BS). The processing unit 123 can be configured to perform analog to digital conversion and digital signal processing.

In an embodiment, the nested modulation comprises a first modulation component and a second modulation component, wherein the first modulation component modulates the quantum signal into the first global phase space region and the second modulation component modulates the quantum signal into one sub-region of the at least two local sub-regions of the first global phase space region, or wherein the first modulation component modulates the quantum signal into the second global phase space region and the second modulation component modulates the quantum signal into one sub-region of the at least two local sub-regions of the second global phase space region.

In an embodiment, the first modulation component comprises at least an amplitude modulation. In an embodiment, the second modulation component comprises a phase modulation. In an embodiment, the second modulation component further comprises an amplitude modulation.

In the exemplary phase space illustration shown in figures 1 and 2, both the classical and quantum information are encoded in the phase. As already mentioned above, the receiver 120 is configured to decode the classical message by determining the quadrant the signal falls into. In an embodiment, the classical message could be one of the four messages: 00, 01, 10, 11. As also already mentioned above, the quantum information corresponds to whether the phase of the signal is above or below the respective diagonal of a quadrant associated with the classical message (e.g., the signals corresponding to + and - signs for the 00 message in figure 2).

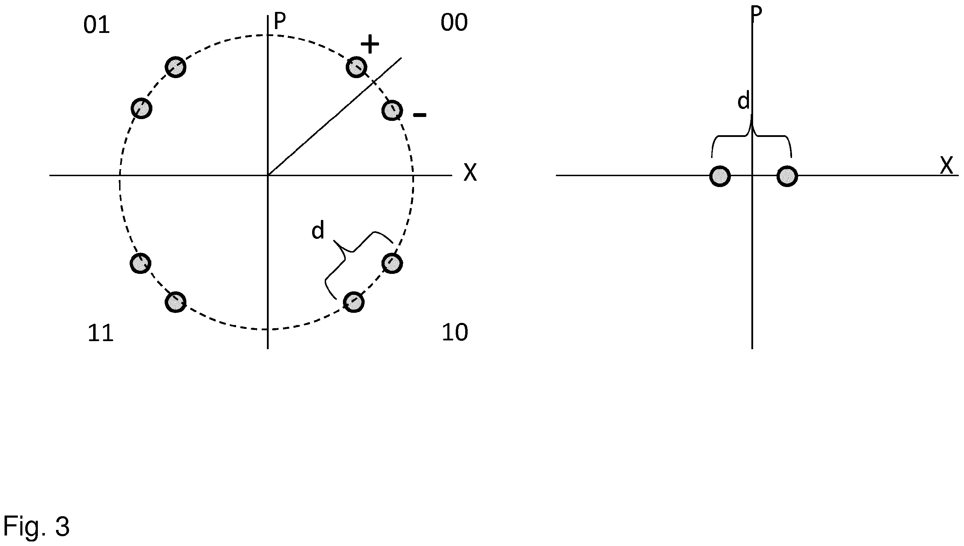

As illustrated in figure 3, the security of the scheme shown in figures 1 and 2 is equivalent to that of a 2-state conventional CV-QKD scheme, where the distance between neighbouring quantum signals in both cases is d.

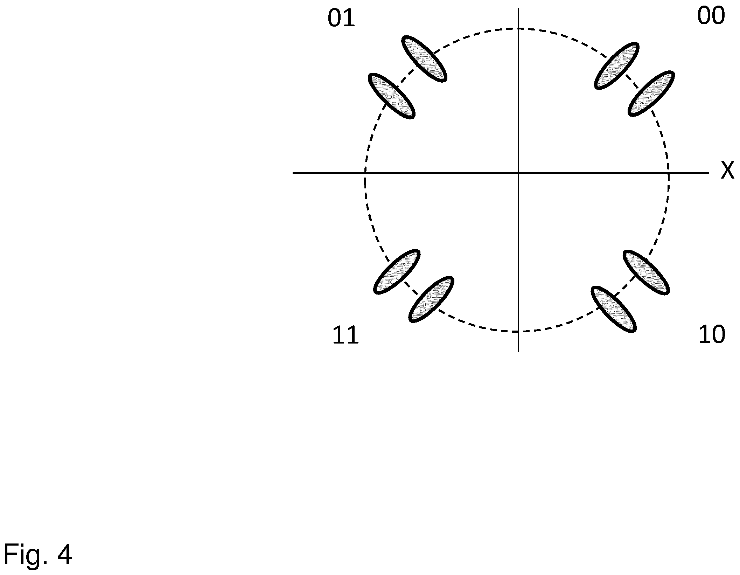

Figure 4 illustrates the effect of intensity fluctuations on the embodiment of figure 1. As will be appreciated, one major advantage provided by embodiments of the invention is that fluctuations of the intensity of the laser (for providing the original pulse or signal) do not have a negative noise effect on the quantum information. This is because the intensity fluctuations stretch the respective signals in the radial direction, which is parallel to the decision boundary for the embodiment of figure 1. Thus, the QKD signal decisions are not affected and embodiments of the invention are robust against intensity noise.

Moreover, the embodiment of the invention shown in figures 1 and 2 is robust against wrong decisions with respect to the classical message. This is because, when the classical message is wrongly detected, the QKD signal detection will be corrupted as well, since the wrong quadrant is being used. However, this does not affect the QKD information much, since the normal quantum bit error rate (QBER) for the quantum information is high anyway (e.g. 40%) and the classical bit error rate (BER) is normally much lower (e.g. 10⁻³). A wrong classical detection will only increase the QBER very slightly (e.g. to 0.401).

Figure 5 and figure 6 show two possible embodiments of the transmitter 110 for modulating signals with a high accuracy in the quadrature values, which is needed for an efficient QKD.

In the embodiment shown in figure 5 the transmitter 110 comprises a CW laser 113, an I/Q modulator 111a and a phase shifter 111b (other possible standard components are omitted for the sake of clarity). Dividing the modulation of the final point into large and small amplitude modulation improves modulation precision. The phase shifter (PS) 111b can be a dedicated device and is used to change the phase with high accuracy. In the embodiment shown in figure 5 the signal can be initially created with a large amplitude and phase shifted with a small phase and then reduced in amplitude to the desired amplitude.

In the embodiment shown in figure 6 the transmitter 110 comprises the CW laser 113 and two phase shifters (PS) 111b. In the embodiment shown in figure 6 the top PS 111b and the bottom PS 111b can be used to set four phase space points (having exemplary phases of 0°, 90°, 180° and 270°) by operating on small and large amplitude signals, respectively. The transmitter 110 is configured to combine these two signals to produce one of the eight phase space points illustrated in the phase space diagram on the right hand side of figure 6.

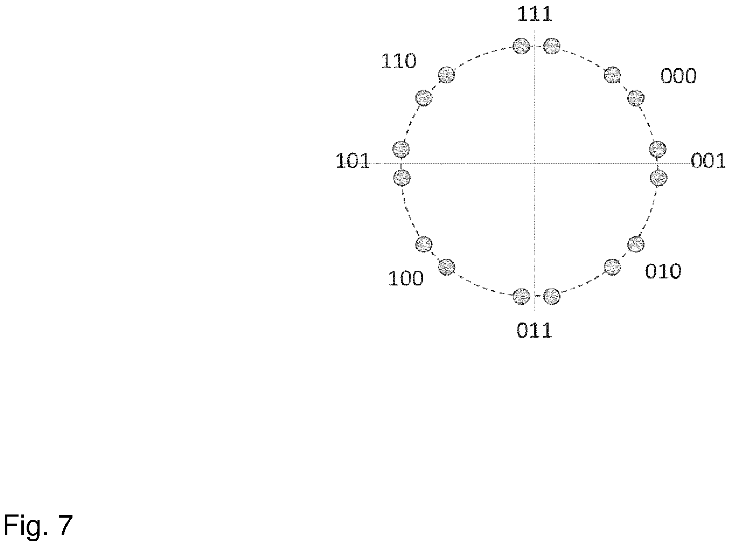

Figure 7 shows a schematic diagram illustrating a set of predefined phase space positions used by the transmitter 110 according to a further embodiment for encoding quantum and classical information. In the embodiment shown in figure 7 the transmitter 110 uses a predefined set of phase space points comprising 16 distinct phase space points. These 16 distinct phase space points comprise 8 pairs of phase space points, wherein each pair is located in one of eighth global phase space regions. Thus, in the embodiment shown in figure 7, the transmitter 110 can encode the classical message as one of the eight messages: 000, 001, 010, 011, 100, 101, 110, 111.

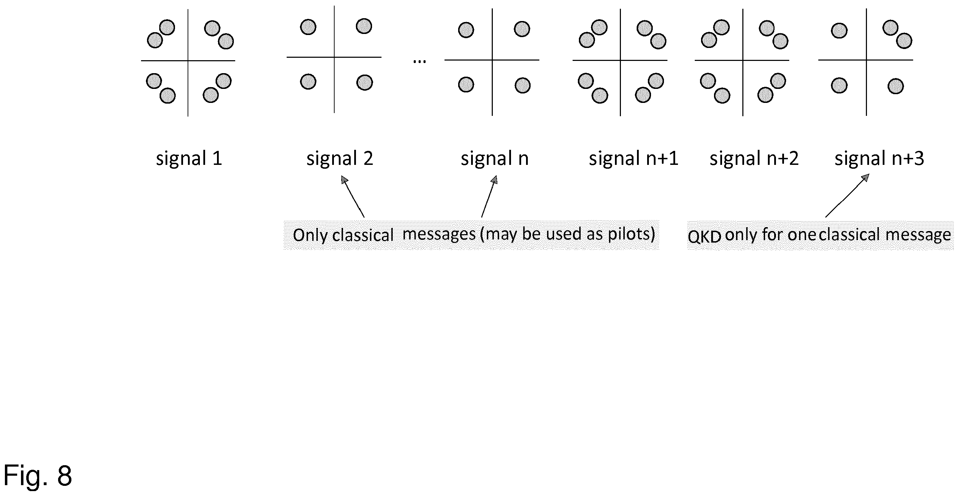

Figure 8 shows a schematic diagram illustrating a temporal sequence of predefined phase space positions used by the transmitter 110 according to an embodiment for encoding quantum and classical information. As will be appreciated from figure 8, in an embodiment the transmitter 110 can be configured for a series or sequence of signals to dynamically adjust or select the set of predefined phase space positions. In other words, in an embodiment the modulator of the transmitter 110 is configured to modulate a further quantum signal with a continuous distribution in phase and amplitude using a further nested modulation for generating a further modulated quantum signal, wherein quadrature components of the further modulated quantum signal define a further phase space position of a further set of predefined phase space positions, wherein the further set of predefined phase space positions differs from the set of predefined phase space positions.

In the exemplary embodiment shown in figure 8, signals 2 to n contain only classical messages and may be used as a pilot or training. In order to be effective for training, many signals may be used. In an embodiment, the transmitter 110 is further configured to use predefined phase space positions as illustrated by signal n+3 of figure 8, where only a subset of the classical messages (in this case only one classical message) carries a QKD signal.

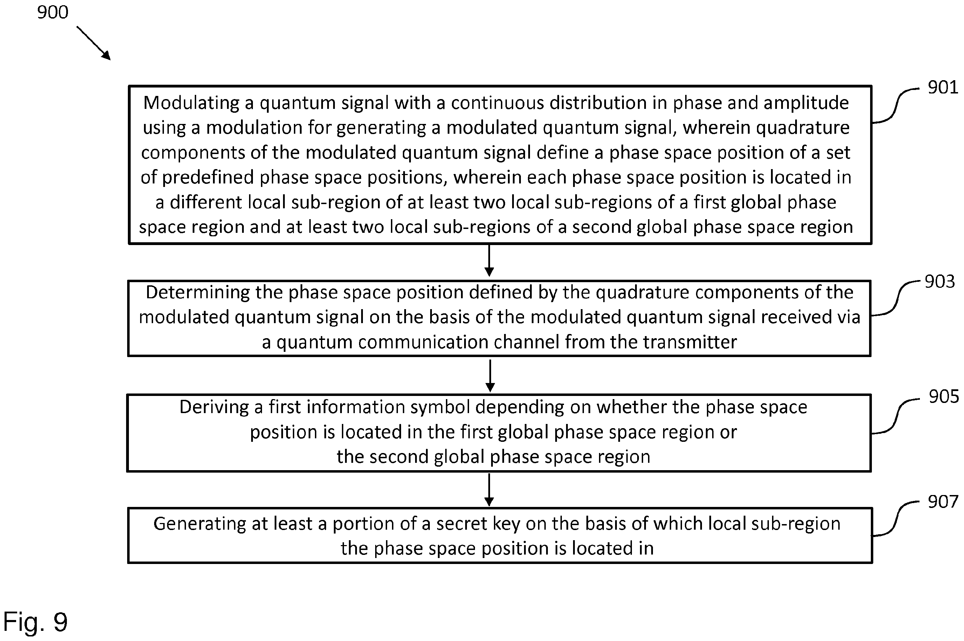

Figure 9 shows a flow chart illustrating a corresponding continuous variable quantum key distribution method 900. The method 900 comprises the following steps: modulating 901 a quantum signal with a continuous distribution in phase and amplitude using a modulation for generating a modulated quantum signal, wherein quadrature components of the modulated quantum signal define a phase space position of a set of predefined phase space positions, wherein each phase space position of the set of predefined phase space positions is located in a different local sub-region of at least two local sub-regions of a first global phase space region and at least two local sub-regions of a second global phase space region, and wherein the phase space positions of the set of predefined phase space positions located in the at least two local sub-regions of the first global phase space region or the at least two local sub-regions of the second global phase space region have different phases; determining 903 the phase space position defined by the quadrature components of the modulated quantum signal on the basis of the modulated quantum signal received via a quantum communication channel from the transmitter 110; deriving 905 a first information symbol depending on whether the phase space position is located in the first global phase space region or the second global phase space region; and generating 907 at least a portion of a secret key on the basis of which local sub-region the phase space position is located in.

While a particular feature or aspect of the disclosure may have been disclosed with respect to only one of several implementations or embodiments, such a feature or aspect may be combined with one or more further features or aspects of the other implementations or embodiments as may be desired or advantageous for any given or particular application. Furthermore, to the extent that the terms "include", "have", "with", or other variants thereof are used in either the detailed description or the claims, such terms are intended to be inclusive in a manner similar to the term "comprise".

Also, the terms "exemplary", "for example" and "e.g." are merely meant as an example, rather than the best or optimal. The terms "coupled" and "connected", along with derivatives thereof may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A transmitter (110) for a continuous variable quantum key distribution system (100), the transmitter (110) comprising:
a modulator (111a, 111b) configured to modulate a quantum signal with a continuous distribution in phase and amplitude using a nested modulation for generating a modulated quantum signal, wherein quadrature components of the modulated quantum signal define a phase space position of a set of predefined phase space positions, wherein each phase space position of the set of predefined phase space positions is located in a different sub-region of at least two sub-regions of a first phase space region and at least two sub-regions of a second phase space region, and wherein the phase space positions of the set of predefined phase space positions located in the at least two sub-regions of the first phase space region or the at least two sub-regions of the second phase space region have different phases, but substantially the same amplitudes, **characterized in that** the nested modulation comprises a first modulation component and a second modulation component,
wherein the first modulation component modulates the quantum signal into the first phase space region and the second modulation component modulates the quantum signal into one sub-region of the at least two sub-regions of the first phase space region, or
wherein the first modulation component modulates the quantum signal into the second phase space region and the second modulation component modulates the quantum signal into one sub-region of the at least two sub-regions of the second phase space region.

2. The transmitter (110) of claim 1, wherein the first modulation component comprises at least a phase modulation.

3. The transmitter (110) of claim 1 or 2, wherein the modulator (111a, 111b) comprises an I/Q modulator (111a) configured to modulate the quantum signal using the first modulation component.

4. The transmitter (110) of any one of claims 1 to 3, wherein the second modulation component comprises a phase modulation.

5. The transmitter (110) of claim 4, wherein the modulator (111a, 111b) comprises a phase shifter (111b) configured to modulate the quantum signal using the second modulation component.

6. The transmitter (110) of claim 4 or 5, wherein the second modulation component further comprises an amplitude modulation.

7. The transmitter (110) of any one of the preceding claims, wherein the modulator (111a, 111b) is configured to modulate a further quantum signal with a continuous distribution in phase and amplitude using a further nested modulation for generating a further modulated quantum signal, wherein quadrature components of the further modulated quantum signal define a further phase space position of a further set of predefined phase space positions, wherein the further set of predefined phase space positions differs from the set of predefined phase space positions.

8. A continuous variable quantum key distribution system (100), comprising:
a transmitter (110) according to any one of the preceding claims; and
a receiver (120) configured to determine the phase space position defined by the quadrature components of the modulated quantum signal on the basis of the modulated quantum signal received via a quantum communication channel from the transmitter (110), wherein the receiver (120) is further configured to derive a first information symbol depending on whether the phase space position is located in the first global phase space region or the second global phase space region and to generate at least a portion of a secret key on the basis of which local sub-region the phase space position is located in.

9. The system (100) of claim 8, wherein the receiver (120) comprises a homodyne detector or heterodyne detector for determining the phase space position defined by the quadrature components of the modulated quantum signal.

10. A continuous variable quantum key distribution method (900), comprising:
modulating (901) a quantum signal with a continuous distribution in phase and amplitude using a modulation for generating a modulated quantum signal, wherein quadrature components of the modulated quantum signal define a phase space position of a set of predefined phase space positions, wherein each phase space position of the set of predefined phase space positions is located in a different local sub-region of at least two local sub-regions of a first global phase space region and at least two local sub-regions of a second global phase space region, and wherein the phase space positions of the set of predefined phase space positions located in the at least two local sub-regions of the first global phase space region or the at least two local sub-regions of the second global phase space region have different phases, but substantially the same amplitudes;
determining (903) the phase space position defined by the quadrature components of the modulated quantum signal on the basis of the modulated quantum signal received via a quantum communication channel;
deriving (905) a first information symbol depending on whether the phase space position is located in the first global phase space region or the second global phase space region; and
generating (907) at least a portion of a secret key on the basis of which local sub-region the phase space position is located in, **characterized in that** . the nested modulation comprises a first modulation component and a second modulation component,
wherein the first modulation component modulates the quantum signal into the first global phase space region and the second modulation component modulates the quantum signal into one sub-region of the at least two local sub-regions of the first global phase space region, or
wherein the first modulation component modulates the quantum signal into the second global phase space region and the second modulation component modulates the quantum signal into one sub-region of the at least two local sub-regions of the second global phase space region.

11. The method of claim 10, wherein the first modulation component comprises at least a phase modulation.

12. The method of claim 10 or 11, wherein the second modulation component comprises a phase modulation.

13. The method of claim 12, wherein the second modulation component further comprises an amplitude modulation.

14. The method of any one of claims 10 to 13, wherein the method comprises the additional step of modulating a further quantum signal with a continuous distribution in phase and amplitude using a further nested modulation for generating a further modulated quantum signal, wherein quadrature components of the further modulated quantum signal define a further phase space position of a further set of predefined phase space positions, wherein the further set of predefined phase space positions differs from the set of predefined phase space positions.

15. A computer program product comprising program code for performing the method of any one of claims 10 to 14, when executed on a processor.

## Patentansprüche

1. Übertragungsvorrichtung (110) für ein System (100) einer Quantenschlüsselverteilung mit kontinuierlichen Variablen, wobei die Übertragungsvorrichtung (110) Folgendes umfasst:
einen Modulator (111a, 111b), der konfiguriert ist, um ein Quantensignal mit einer kontinuierlichen Verteilung in Phase und Amplitude unter Verwendung einer verschachtelten Modulation zum Erzeugen eines modulierten Quantensignals zu modulieren, wobei Quadraturkomponenten des modulierten Quantensignals eine Phasenraumposition eines Satzes von vordefinierten Phasenraumpositionen definieren, wobei sich jede Phasenraumposition des Satzes von vordefinierten Phasenraumpositionen in einem unterschiedlichen Teilbereich von wenigstens zwei Teilbereichen eines ersten Phasenraumbereichs und wenigstens zwei Teilbereichen eines zweiten Phasenraumbereichs befindet, und wobei die Phasenraumpositionen des Satzes von vordefinierten Phasenraumpositionen, die sich in den wenigstens zwei Teilbereichen des ersten Phasenraumbereichs oder den wenigstens zwei Teilbereichen des zweiten Phasenraumbereichs befinden, unterschiedliche Phasen, aber im Wesentlichen die gleichen Amplituden aufweisen, **dadurch gekennzeichnet, dass** die verschachtelte Modulation eine erste Modulationskomponente und eine zweite Modulationskomponente umfasst,
wobei die erste Modulationskomponente das Quantensignal in den ersten Phasenraumbereich moduliert und die zweite Modulationskomponente das Quantensignal in einen Teilbereich der wenigstens zwei Teilbereiche des ersten Phasenraumbereichs moduliert, oder
wobei die erste Modulationskomponente das Quantensignal in den zweiten Phasenraumbereich moduliert und die zweite Modulationskomponente das Quantensignal in einen Teilbereich der wenigstens zwei Teilbereiche des zweiten Phasenraumbereichs moduliert.

2. Übertragungsvorrichtung (110) nach Anspruch 1, wobei die erste Modulationskomponente wenigstens eine Phasenmodulation umfasst.

3. Übertragungsvorrichtung (110) nach Anspruch 1 oder 2, wobei der Modulator (111a, 111b) einen I/Q-Modulator (111a) umfasst, der konfiguriert ist, um das Quantensignal unter Verwendung der ersten Modulationskomponente zu modulieren.

4. Übertragungsvorrichtung (110) nach einem der Ansprüche 1 bis 3, wobei die zweite Modulationskomponente eine Phasenmodulation umfasst.

5. Übertragungsvorrichtung (110) nach Anspruch 4, wobei der Modulator (111a, 111b) einen Phasenschieber (111b) umfasst, der konfiguriert ist, um das Quantensignal unter Verwendung der zweiten Modulationskomponente zu modulieren.

6. Übertragungsvorrichtung (110) nach Anspruch 4 oder 5, wobei die zweite Modulationskomponente ferner eine Amplitudenmodulation umfasst.

7. Übertragungsvorrichtung (110) nach einem der vorhergehenden Ansprüche, wobei der Modulator (111a, 111b) konfiguriert ist, um ein weiteres Quantensignal mit einer kontinuierlichen Verteilung in Phase und Amplitude unter Verwendung einer weiteren verschachtelten Modulation zum Erzeugen eines weiteren modulierten Quantensignals zu modulieren, wobei Quadraturkomponenten des weiteren modulierten Quantensignals eine weitere Phasenraumposition eines weiteren Satzes von vordefinierten Phasenraumpositionen definieren, wobei sich der weitere Satz von vordefinierten Phasenraumpositionen von dem Satz von vordefinierten Phasenraumpositionen unterscheidet.

8. System (100) der Quantenschlüsselverteilung mit kontinuierlichen Variablen, das Folgendes umfasst:
eine Übertragungsvorrichtung (110) nach einem der vorhergehenden Ansprüche; und
einen Empfänger (120), der konfiguriert ist, um die Phasenraumposition, die durch die Quadraturkomponenten des modulierten Quantensignals definiert wird, auf der Basis des modulierten Quantensignals zu bestimmen, das über einen Quantenkommunikationskanal von der Übertragungsvorrichtung (110) empfangen wird, wobei der Empfänger (120) ferner konfiguriert ist, um ein erstes Informationssymbol abhängig davon zu gewinnen, ob sich die Phasenraumposition in dem ersten globalen Phasenraumbereich oder dem zweiten globalen Phasenraumbereich befindet, und um auf der Basis, in welchem lokalen Teilbereich sich die Phasenraumposition befindet, wenigstens einen Anteil eines geheimen Schlüssels zu erzeugen.

9. System (100) nach Anspruch 8, wobei der Empfänger (120) einen Homodyndetektor oder einen Heterodyndetektor zum Bestimmen der Phasenraumposition, die durch die Quadraturkomponenten des modulierten Quantensignals definiert wird, umfasst.

10. Verfahren (900) für die Quantenschlüsselverteilung mit kontinuierlichen Variablen, das Folgendes umfasst:
Modulieren (901) eines Quantensignals mit einer kontinuierlichen Verteilung in Phase und Amplitude unter Verwendung einer Modulation zum Erzeugen eines modulierten Quantensignals, wobei Quadraturkomponenten des modulierten Quantensignals eine Phasenraumposition eines Satzes von vordefinierten Phasenraumpositionen definieren, wobei sich jede Phasenraumposition des Satzes von vordefinierten Phasenraumpositionen in einem unterschiedlichen lokalen Teilbereich von wenigstens zwei lokalen Teilbereichen eines ersten globalen Phasenraumbereichs und wenigstens zwei lokalen Teilbereichen eines zweiten globalen Phasenraumbereichs befindet, und wobei die Phasenraumpositionen des Satzes von vordefinierten Phasenraumpositionen, die sich in den wenigstens zwei lokalen Teilbereichen des ersten globalen Phasenraumbereichs oder den wenigstens zwei lokalen Teilbereichen des zweiten globalen Phasenraumbereichs befinden, unterschiedliche Phasen, aber im Wesentlichen die gleichen Amplituden aufweisen;
Bestimmen (903) der Phasenraumposition, die durch die Quadraturkomponenten des modulierten Quantensignals definiert ist, auf der Basis des modulierten Quantensignals, das über einen Quantenkommunikationskanal empfangen wird;
Gewinnen (905) eines ersten Informationssymbols abhängig davon, ob sich die Phasenraumposition in dem ersten globalen Phasenraumbereich oder dem zweiten globalen Phasenraumbereich befindet; und
Erzeugen (907) wenigstens eines Anteils eines geheimen Schlüssels auf der Basis, in welchem lokalen Teilbereich sich die Phasenraumposition befindet, **dadurch gekennzeichnet, dass** die verschachtelte Modulation eine erste Modulationskomponente und eine zweite Modulationskomponente umfasst,
wobei die erste Modulationskomponente das Quantensignal in den ersten globalen Phasenraumbereich moduliert und die zweite Modulationskomponente das Quantensignal in einen Teilbereich der wenigstens zwei lokalen Teilbereiche des ersten globalen Phasenraumbereichs moduliert, oder
wobei die erste Modulationskomponente das Quantensignal in den zweiten globalen Phasenraumbereich moduliert und die zweite Modulationskomponente das Quantensignal in einen Teilbereich der wenigstens zwei lokalen Teilbereiche des zweiten globalen Phasenraumbereichs moduliert.

11. Verfahren nach Anspruch 10, wobei die erste Modulationskomponente wenigstens eine Phasenmodulation umfasst.

12. Verfahren nach Anspruch 10 oder 11, wobei die zweite Modulationskomponente eine Phasenmodulation umfasst.

13. Verfahren nach Anspruch 12, wobei die zweite Modulationskomponente ferner eine Amplitudenmodulation umfasst.

14. Verfahren nach einem der Ansprüche 10 bis 13, wobei das Verfahren den zusätzlichen Schritt des Modulierens eines weiteren Quantensignals mit einer kontinuierlichen Verteilung in Phase und Amplitude unter Verwendung einer weiteren verschachtelten Modulation zum Erzeugen eines weiteren modulierten Quantensignals umfasst, wobei Quadraturkomponenten des weiteren modulierten Quantensignals eine weitere Phasenraumposition eines weiteren Satzes von vordefinierten Phasenraumpositionen definieren, wobei sich der weitere Satz von vordefinierten Phasenraumpositionen von dem Satz von vordefinierten Phasenraumpositionen unterscheidet.

15. Computerprogrammprodukt, das einen Programmcode zum Durchführen des Verfahrens nach einem der Ansprüche 10 bis 14 umfasst, wenn es auf einem Prozessor ausgeführt wird.

## Revendications

1. Émetteur (110) pour un système de distribution continue de clé quantique variable (100), l'émetteur (110) comprenant :
un modulateur (111a, 111b) configuré pour moduler un signal quantique avec une distribution continue en phase et en amplitude à l'aide d'une modulation imbriquée pour générer un signal quantique modulé, des composantes en quadrature du signal quantique modulé définissant une position d'espace de phase d'un ensemble de positions d'espace de phase prédéfinies, chaque position d'espace de phase de l'ensemble de positions d'espace de phase prédéfinies étant située dans une sous-région différente d'au moins deux sous-régions d'une première région d'espace de phase et d'au moins deux sous-régions d'une seconde région d'espace de phase, et les positions d'espace de phase de l'ensemble de positions d'espace de phase prédéfinies situées dans les au moins deux sous-régions de la première région d'espace de phase ou les au moins deux sous-régions de la seconde région d'espace de phase ayant des phases différentes, mais sensiblement les mêmes amplitudes, **caractérisé en ce que** la modulation imbriquée comprend une première composante de modulation et une seconde composante de modulation,
la première composante de modulation modulant le signal quantique dans la première région d'espace de phase et la seconde composante de modulation modulant le signal quantique dans une sous-région des au moins deux sous-régions de la première région d'espace de phase, ou
la première composante de modulation modulant le signal quantique dans la seconde région d'espace de phase et la seconde composante de modulation modulant le signal quantique dans une sous-région des au moins deux sous-régions de la seconde région d'espace de phase.

2. Émetteur (110) selon la revendication 1, dans lequel la première composante de modulation comprend au moins une modulation de phase.

3. Émetteur (110) selon la revendication 1 ou 2, dans lequel le modulateur (111a, 111b) comprend un modulateur I/Q (111a) configuré pour moduler le signal quantique à l'aide

4. Émetteur (110) selon l'une quelconque des revendications 1 à 3, dans lequel la seconde composante de modulation comprend une modulation de phase.

5. Émetteur (110) selon la revendication 4, dans lequel le modulateur (111a, 111b) comprend un déphaseur (111b) configuré pour moduler le signal quantique à l'aide de la seconde composante de modulation.

6. Émetteur (110) selon la revendication 4 ou 5, dans lequel la seconde composante de modulation comprend en outre une modulation d'amplitude.

7. Émetteur (110) selon l'une quelconque des revendications précédentes, dans lequel le modulateur (111a, 111b) est configuré pour moduler un autre signal quantique avec une distribution continue en phase et en amplitude à l'aide d'une autre modulation imbriquée pour générer un autre signal quantique modulé, des composantes en quadrature de l'autre signal quantique modulé définissant une autre position d'espace de phase d'un autre ensemble de positions d'espace de phase prédéfinies, l'autre ensemble de positions d'espace de phase prédéfini différant de l'ensemble de positions d'espace de phase prédéfini.

8. Système de distribution continue de clé quantique variable (100), comprenant :
un émetteur (110) selon l'une quelconque des revendications précédentes ; et
un récepteur (120) configuré pour déterminer la position de l'espace de phase définie par les composantes en quadrature du signal quantique modulé sur la base du signal quantique modulé reçu par l'intermédiaire d'un canal de communication quantique depuis l'émetteur (110), le récepteur (120) étant en outre configuré pour dériver un premier symbole d'informations selon que la position d'espace de phase est située dans la première région d'espace de phase global ou la seconde région d'espace de phase global et pour générer au moins une partie d'une clé secrète sur la base de du fait de savoir dans quelle sous-région locale la position d'espace de phase est située.

9. Système (100) selon la revendication 8, dans lequel le récepteur (120) comprend un détecteur homodyne ou un détecteur hétérodyne pour déterminer la position d'espace de phase définie par les composantes en quadrature du signal quantique modulé.

10. Procédé de distribution continue de clé quantique à variable (900), comprenant :
la modulation (901) d'un signal quantique avec une distribution continue en phase et en amplitude à l'aide d'une modulation pour générer un signal quantique modulé, des composantes en quadrature du signal quantique modulé définissant une position d'espace de phase d'un ensemble de positions d'espace de phase prédéfinies, chaque position d'espace de phase de l'ensemble de positions d'espace de phase prédéfinies étant située dans une sous-région locale différente d'au moins deux sous-régions locales d'une première région d'espace de phase global et d'au moins deux sous-régions locales d'une seconde région d'espace de phase global, et les positions d'espace de phase de l'ensemble de positions d'espace de phase prédéfinies situées dans les au moins deux sous-régions locales de la première région d'espace de phase global ou les au moins deux sous-régions locales de la seconde région d'espace de phase global ayant des phases différentes, mais sensiblement les mêmes amplitudes ;
la détermination (903) de la position d'espace de phase définie par les composantes en quadrature du signal quantique modulé sur la base du signal quantique modulé reçu par l'intermédiaire d'un canal de communication quantique ;
la dérivation (905) d'un premier symbole d'informations selon que la position d'espace de phase est située dans la première région d'espace de phase global ou dans la seconde région d'espace de phase global ; et
la génération (907) d'au moins une partie d'une clé secrète sur la base du fait de savoir dans quelle sous-région locale la position d'espace de phase est située, **caractérisé en ce que** la modulation imbriquée comprend une première composante de modulation et une seconde composante de modulation,
la première composante de modulation modulant le signal quantique dans la première région d'espace de phase global et la seconde composante de modulation modulant le signal quantique dans une sous-région des au moins deux sous-régions locales de la première région d'espace de phase global, ou la première composante de modulation modulant le signal quantique dans la seconde région d'espace de phase global et la seconde composante de modulation modulant le signal quantique dans une sous-région des au moins deux sous-régions locales de la seconde région d'espace de phase global.

11. Procédé selon la revendication 10, dans lequel la première composante de modulation comprend au moins une modulation de phase.

12. Procédé selon la revendication 10 ou 11, dans lequel la seconde composante de modulation comprend une modulation de phase.

13. Procédé selon la revendication 12, dans lequel la seconde composante de modulation comprend en outre une modulation d'amplitude.

14. Procédé selon l'une quelconque des revendications 10 à 13, dans lequel le procédé comprend l'étape supplémentaire de modulation d'un autre signal quantique avec une distribution continue en phase et en amplitude à l'aide d'une autre modulation imbriquée pour générer un autre signal quantique modulé, des composantes en quadrature de l'autre signal quantique modulé définissant une autre position d'espace de phase d'un autre ensemble de positions d'espace de phase prédéfinies, l'autre ensemble de positions d'espace de phase prédéfini différant de l'ensemble de positions d'espace de phase prédéfini.

15. Produit-programme informatique comprenant un code de programme pour effectuer le procédé selon l'une quelconque des revendications 10 à 14 lorsqu'il est exécuté sur un processeur.
